(19)

**Europäisches Patentamt**
**European Patent Office**
**Office européen des brevets**

(11) **EP 4 194 693 A1**

(12) **EUROPEAN PATENT APPLICATION**

(43) Date of publication:
**14.06.2023 Bulletin 2023/24**

(21) Application number: **21213773.1**

(22) Date of filing: **10.12.2021**

(51) International Patent Classification (IPC):
**F03G 6/06** *(2006.01)*   **F02C 1/10** *(2006.01)*
**F02G 1/04** *(2006.01)*

(52) Cooperative Patent Classification (CPC):
**F03G 6/064; F02C 1/10;** F05D 2240/128;
F05D 2250/323; F05D 2250/324

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Walpita, Nalin**
**00700 Colombo (LK)**

(72) Inventor: **Walpita, Nalin**
**00700 Colombo (LK)**

(74) Representative: **Cabinet Nony**
**11 rue Saint-Georges**
**75009 Paris (FR)**

(54) **AN ENERGY CONVERSION SYSTEM**

(57)    An energy conversion system (100, 200, 300) is disclosed with a converging-diverging duct (120), a first turbine (112, 312), a compressor (160), a second turbine (132, 332), and a return duct. The first converging-diverging duct is configured to receive a working fluid. The first turbine is configured to increase or decrease kinetic energy of the working fluid entering the first converging-diverging duct. The compressor device is configured to receive the working fluid after exiting the converging-diverging duct. The second turbine is in a flow path of the working fluid between the first converging-diverging duct and the compressor device. The second turbine is configured to decrease or increase kinetic energy of the working fluid entering the compressor device. The first and second turbines impart opposite changes to kinetic energy in the working fluid. The return duct is configured to return the working fluid to the first converging-diverging duct after passing through the compressor device.

FIG. 1A

**Description**

BACKGROUND

Thermoacoustic (TA) engines are thermoacoustic devices that use high-amplitude sound waves to pump heat from one place to another or use a heat difference to produce work in the form of sound waves, which may be converted into electrical current. These devices can be designed to use either standing wave or travelling wave. Both such designs may be described using the Stirling cycle.

A Stirling cycle is a thermodynamic cycle that describes the general class of Stirling cycle devices. Stirling cycle devices were invented in 1816 by Rev. Robert Stirling and in best practice form have retained a reciprocating design including twin piston or piston regenerator combinations. Ericsson cycle devices, which have two constant pressure steps, have similarly used complex mechanical arrangements, as well as a reversible regenerator.

TA engines have used either traveling or stationary waves or pressure variations in air or gas masses to carry out compression, heat transfer, and expansion functions. Whilst TA engines eliminate a moving regenerator, they still suffer from serious limitations in achieving the desired heat transfer without creating excessive flow friction losses. TA engines may be described by acoustic equations. Pressure oscillations or acoustic type pressure variations can also create high decibel sounds due to flexing of containment walls etc.

SUMMARY

Various aspects include an energy conversion system with a first converging-diverging duct, a first turbine, a compressor, a second turbine, and a return duct. The first converging-diverging duct is configured to receive a working fluid. The first turbine is configured to increase or decrease kinetic energy of the working fluid entering the first converging-diverging duct. The compressor device is configured to receive the working fluid after exiting the converging-diverging duct. The second turbine is disposed in a flow path of the working fluid between the first converging-diverging duct and the compressor device. The second turbine is configured to decrease (in the case of power generation) or increase (in the case of cooling) kinetic energy of the working fluid entering the compressor device. The first and second turbines impart opposite changes to kinetic energy in the working fluid. The return duct is configured to return the working fluid to the first converging-diverging duct after passing through the compressor device.

In some embodiments, the energy conversion system may be a flow type Stirling-Ericsson cycle power generation or cooling system. In some embodiments, the energy conversion system may include a heat exchanger configured to receive and change a temperature of the working fluid from the receiving chamber disposed after exiting the first converging-diverging duct. The compressor device may be a reciprocating compressor configured to change a volume and increase the pressure of the working fluid from the receiving chamber before being returned to an initial chamber housing the first turbine. The compressor device may be a second converging-diverging duct configured to change a pressure and/or a velocity of the working fluid using an isothermal process. The second converging-diverging duct may be configured to draw heat out of the working fluid flowing therein. The second converging-diverging duct may be configured to initially reduce a supersonic velocity of the working fluid to a sonic velocity while increasing a pressure of the working fluid and subsequently reduce the sonic velocity and further increase the pressure of the working fluid. The compressor device may include a second converging-diverging duct in the flow path following the second converging-diverging duct. The first turbine may decrease the kinetic energy of the working fluid and the second turbine may increase the kinetic energy of the working fluid, such as in the case of a converging-diverging duct acting as a compressor.

In some embodiments, the energy conversion system may include an external heater configured to heat the first converging-diverging duct for heating the working fluid flowing therein. The heated first converging-diverging duct may increase a velocity of the working fluid flowing therein. Some embodiments may include a temperature compensation heater disposed in the flow path between the compressor device and the first converging-diverging duct. In some embodiments, the energy conversion system may include an expansion turbine in the flow path between the compressor device and the first converging -diverging duct.

In some embodiments, the energy conversion system may include an external heater configured to heat the working fluid between the second converging-diverging duct and the first converging-diverging duct. In some embodiments, the first and second turbines may input and output more kinetic energy than any other elements of the energy conversion system. In some embodiments, the first turbine may be configured to increase the kinetic energy of the working fluid for providing power output through energy acquisition in the first converging-diverging duct via the second turbine or the first turbine may be configured to decrease the kinetic energy of the working fluid for cooling the working fluid. In some embodiments, the first turbine may be configured to decrease the kinetic energy of the working fluid for cooling the working fluid.

BRIEF DESCRIPTION OF THE DRAWINGS

The accompanying drawings, which are incorporated herein and constitute part of this specification, illustrate example embodiments of various embodiments, and together with the general description given above and the detailed description given below, serve to explain the features of the claims.

FIG. 1A is a schematic block diagram illustrating an embodiment flow type Stirling-Ericsson cycle system that includes a reciprocating compressor, in accordance with various embodiments.

FIG. 1B is a graph of the changes in working fluid pressure and volume as related to the working fluid velocity between stations of the system in FIG. 1A, in accordance with various embodiments.

FIG. 1C is a table of calculated values corresponding to the system in FIG. 1A, in accordance with various embodiments.

FIG. 2A is a schematic block diagram illustrating an embodiment flow type Stirling-Ericsson cycle system that includes a flow type compressor, in accordance with various embodiments.

FIG. 2B is a graph of the changes in working fluid pressure and volume as related to the working fluid velocity between stations of the system in FIG. 2A, in accordance with various embodiments.

FIGS. 2C-2D are tables of calculated values corresponding to the system in FIG. 2A, in accordance with various embodiments.

FIG. 3A is a schematic block diagram illustrating an embodiment suitable for use in a cooling - refrigeration system, in accordance with various embodiments.

FIG. 3B is a graph of the various steps in the cycle for the refrigeration cycle arrangement described with regard to FIG. 3A in an expansion case.

FIGS. 3C-3D are tables of calculated values corresponding to the system in FIG. 3A, in accordance with various embodiments.

DETAILED DESCRIPTION

Various embodiments will be described in detail with reference to the accompanying drawings. Wherever possible, the same reference numbers will be used throughout the drawings to refer to the same or like parts. References made to particular examples and implementations are for illustrative purposes, and are not intended to limit the scope of the claims.

The embodiments described in this application relate to systems that use Stirling and Ericsson power generation or cooling cycles, which employ a uni-flow or single directional flow type process to generate output power and/or cooling/refrigeration with a constant temperature heat input, and for which the solution of the governing equations provides positive power output cases. The uni-flow or single directional flow type process may include pressure variations in the direction of flow but without oscillations in pressure at any given station or location therefore, which would mean a through-flow or circulating-flow type Stirling or Ericsson cycle has been achieved.

Conventional Stirling and/or TA engines include piston type devices or devices utilizing pressure variations in fixed locations. In the case of Ericsson cycles, conventional solutions only include systems with intermittent or constant heat input followed by expansion steps. The embodiments described herein may include a continuous heat input at constant temperature into a convergent-divergent nozzle arrangements, followed by elements that absorb velocity energy (i.e., kinetic energy) generated in a suitable turbine.

It has been observed that it is possible to embody an Ericsson cycle into a continuous flow device without pressure variations in fixed locations, thereby avoiding high decibel sound fields, as well as the isothermal heat input, work generation, heat recuperation, compression and heat transfer processes have been completely separated one from the other, enabling optimization of each independently. As such, some embodiments may include a separate isothermal heat input process resulting in high gas velocity changes. The energy from the change in velocity may then be absorbed in one or several suitable configured and designed turbine wheels.

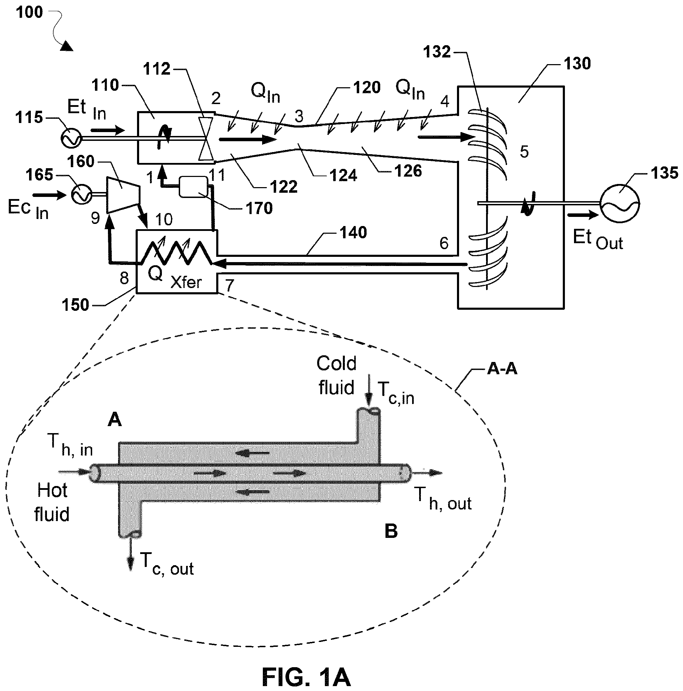

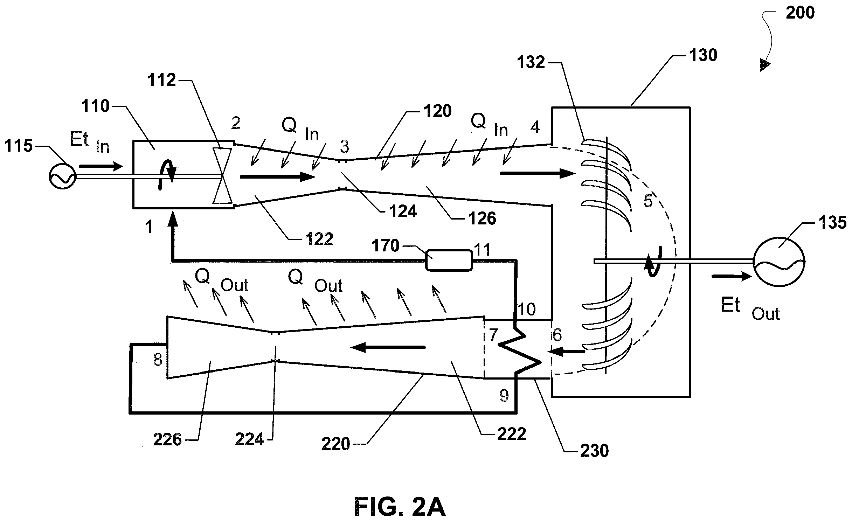

In some embodiments, such as those illustrated in FIGS. 1A, a reciprocating compressor (also known as a rotating or reciprocating compressor), which is a first type of compressor device, may be utilized to recompress spent vapor. In further embodiments, such as those illustrated in FIG. 2A, the reciprocating compressor may be replaced by a pure flow device, which is a second type of compressor device. A pure flow device is one in which the compression step is carried out in a compression device that is a mirror image of a converging-diverging duct used elsewhere in the system. In particular, energy in the working fluid emerging from an expansion and heat inflow section may not be completely absorbed in an expansion turbine (e.g., 132 at station (5)). Rather, a portion of that energy may be retained and utilized at an alternate heat exchanger 230 located in the flow path before the entry to a flow type compressor section (e.g., through a second converging-diverging duct 220). As the working fluid passes through the second converging-diverging duct 220, heat may be released (i.e., Qout). Thus, as used herein, the term "compressor device" may refer to a reciprocating compressor and/or a pure flow device as described herein.

In accordance with various embodiments, the equations that govern the working fluid flow are highly consistent and may be used to solve for the heat acquisition expansion section (e.g., between stations 1 and 4 in FIG. 1A), as well as the heat releasing compression section (e.g., between stations 4 and 8 in FIG. 2A). The theoretical analysis of an ideal case shows that the Carnot efficiency may be predicted, which demonstrates the validity of the governing equations. In a practical case, which takes frictional losses into account, the predicted efficiency for example with a temperature of 450 C on the working hot side (i.e., between stations 1 and 4 in FIGS. 1A and 2A) may be relatively high.

Theoretical efficiency of an ideal cycle in the various embodiments may be the same or slightly less than the Carnot efficiency, proving that the physical principles governing the device are sound and correct. The various embodiments may include or provide substantial increases in the heat transfer (i.e., HT) area required for an isothermal expansion and geometric limitations on the HT area may be removed, which reduces or eliminates the need to include a point focus, such as in medium temperature solar applications.

As a result, various embodiments may form a substantially enhanced heat transfer area for isothermal heat input as compared to other similar cycles, resulting in a lower temperature solar thermal power generation system operation and especially operation of power tower type solar power plants in which the thermal to electrical conversion efficiency may be significantly higher than comparable Rankine cycle plants. The temperature requirement for a given efficiency may be lower, leading to less intense beams of solar radiation impinging on larger areas. Further in the case of a solar powered cycle, the whole of the converging diverging duct, for example mounted in a vertical orientation and with a transparent window in front, may act as a solar receiver cavity, providing much large solar receiver area than all other point focus receivers for example atop solar power towers.

Recuperative heat transfer may take place in flow type conventional heat exchangers, as compared with managing heat transfer in internal heat exchangers with oscillating flows. All such thermoacoustic, piston-type, and oscillating Stirling and Ericsson cycles suffer from heat transfer limitations due to limitations in area and variation in heat transfer coefficients in oscillating flows. In the case of very high temperature solar applications using reciprocating devices, heat may be concentrated into a small area at the top of the cylinder head, leading to serious heat transfer issues.

In some embodiments, the system may be used in a refrigeration or cooling cycle, such as in Stirling cryocoolers of various types. Stirling cryocoolers typically use reciprocating cycles, either crank driven or free piston. In these embodiments, a flow type system may include cryogenic cooling at the necessary very low temperature, typically 50 - 150 degrees Kelvin. However, a low coefficient of performance (COP) may be observed. The flow type cryogenic compressor disclosed herein may be capable of much higher COPs, with a multiplier of up to four times for very low temperatures, as compared with presently available devices.

Various embodiments may include a Stirling or Ericsson flow type cryocooler, which uses one or more external pressurizing devices to provide the necessary motive power in the working fluid and enable the working fluid to travel through a converging-diverging duct system. Such a system may operate similar to a piston in a pulse tube cooler, except that a continuous flow may be achieved. In contrast to contemporary pulse type and reciprocating Stirling devices or TA devices, in which flow and/or pressure may vary with time, in various embodiments flows may be constant and pressure need not oscillate about a mean. Power and energy extraction and insertion may be done through continuous flow devices, such as turbines or positive displacement pumps, and not through piston and cylinder mechanisms.

The area of Stirling and Ericsson cycles has been well explored over the last 200 years, since the invention of the former by Rev. Robert Stirling in 1816 and the latter by John Ericsson. However, conventional solutions have not been able to achieve or develop pure or near-pure flow type devices.

Flows in converging-diverging ducts have been classified as Rayleigh flows (i.e., flows with heat addition in a constant area duct) or Fanno flows (i.e., flow through a constant area duct with friction). Detailed analysis of isothermal flows in converging - diverging ducts have been carried out by IB Cambel, among others. Such analysis may be used in the development of the embodiments. In the field of compressible fluid flows, converging-diverging ducts have been developed for a variety of applications, however isothermal ducts applied to power generation appears not to have been pursued.

Conventional solutions or research in electro-thermodynamics use motive power for compression, provided by a set of charged particles. Similarly, the energy generating medium may also include a set of charged particles, which adds a level of complexity to fluid and particle management therein. Other conventional solutions may include a magneto-hydrodynamic (MHD) generator that includes a partially ionized gas that produces power by traversing a magnetic field perpendicular to the flow. By Lenz's law an electric current is then produced in the other perpendicular direction to the flow. Other solutions may include liquid metal based MHD systems, in which a two-phase flow is utilized.

In various embodiments, electro-hydrodynamics (EHD), electro-thermodynamics (ETD), and/or MHD electricity generation may be carried out within the duct system by employing a fluid with conducting particles.

**Power generation cycle**

FIG. 1A is a schematic view of an energy conversion system in the form of a power generating engine 100 with a recirculating working fluid, in accordance with various embodiments. Starting at station (1), the working fluid enters a first chamber 110 that includes a first turbine112 driven to rotate by a first motor 115, which acts as a suitable booster compressor for increasing the velocity of the working fluid. The first turbine 112 may be a "compression turbine," which as used herein refers to a mechanical device in which an outgoing fluid stream has a higher overall energy level than the incoming fluid stream due to the input of mechanical energy into the fluid stream from an external source, such as a rotational shaft coupled to the first motor 115. Energy in the fluid stream includes pressure, temperature, and velocity and the compression turbine may be configured to affect change in any one or combination of these quantities. The first motor 115 may be a machine, such as one powered by electricity, internal combustion, or other power source, that supplies motive power for moving parts. In accordance with various embodiments, the first motor 115 may be used to impart a suitable velocity on the working fluid at an entrance to a first converging-diverging duct 140. Common sense also shows that a fluid velocity is required to enter a duct. The working fluid may then have an increased velocity as it enters a first converging-diverging duct 120 that includes a first converging section 122, a first throat section 124, and a first diverging section 126, which correspond to the second, third, and fourth stations (2, 3, 4), respectively. The first converging section 122 may be formed as a converging duct that constricts and thereby accelerates the subsonic flow of the working fluid. The first throat section 124 may be formed as a central passage that narrows to a bottleneck and couples the first converging section 122 to the first diverging section 126. Sonic velocity may be achieved at the first throat section 124. The description of the first throat section 124 as a "bottleneck" is meant to describe the geometry of the structure and is not intended to imply a blockage or significant interference with the flow. The first diverging section 126 may be formed as a diverging duct that expands the flow of the working fluid. In accordance with various embodiments, no work interactions (i.e., energy transfer of a mechanical or magneto-hydrodynamic based electrical nature) on the working fluid needs to actively take place in the three sections (i.e., 122, 124, 126) of the first converging-diverging duct 120. Rather, the first converging-diverging duct 120 may receive heat $Q_{In}$, from solar radiation or an alternative heat source, along all or part of its length. The received heat $Q_{In}$ will add heat energy across the first converging section 122, first throat section 124, and the first diverging section 126, which may be used to maintain isothermal flow conditions across those sections. The working fluid may be a single-phase gaseous medium with no enhanced electrical conductivity. Flow of the working fluid may initially be subsonic as it enters the first converging section 122, becoming sonic as it reaches the first throat section 124, and then supersonic after passing through the first diverging section 126.

The working fluid emerging from the first diverging section 126, at station (4), may be moving at a supersonic velocity, which enables the resulting flow energy to be absorbed by a second turbine 132, located in a second chamber 130 at station (5). The second turbine 132 may be an "expansion turbine," which as used herein refers to a mechanical device in which an outgoing fluid stream has a lower overall energy level than the incoming fluid stream from a conversion of energy in the fluid stream into mechanical energy for export via a rotational shaft of the expansion turbine. Energy in the fluid stream includes pressure, temperature, and velocity components and the expansion turbine may be configured to affect change in any one or combination of these quantities. Rotational energy imparted on the second turbine 132 by the working fluid may be collected by a generator 135. The generator 135 may be a dynamo or similar machine for converting mechanical energy into electricity. The energy absorbed by the second turbine 132 and collected by the generator 135 comprises the main net energy output of the device and may be exported from the power cycle to external loads. In this way, the kinetic energy in the working fluid, created as a result of the isothermal flow process through the first converging-diverging duct 120 may be converted into rotational energy. In fact, so much energy may be absorbed by the second turbine 132 that an exit velocity of the working fluid after passing through the second turbine 132 may be just above zero. Alternatively, the second turbine 132 may be designed and/or configured to absorb less energy, such that the exit velocity of the working fluid after passing through the second turbine 132 may be significantly above zero to facilitate, for example, entry to the lower compression section. The second chamber 130 may be insulated so as to maintain the working fluid therein, after passing through the second turbine 132, at or near a constant temperature therein, before being released toward a heat exchanger 150.

The working fluid may be released from the second chamber 130, at a sixth station (6), through a conduit 140, and enter a heat exchanger 150 at a seventh station (7). The heat exchanger 150 may be configured to reduce an upper temperature $T_{max}$ of the working fluid, by heat transfer of released heat $Q_{Xfer}$. The released heat $Q_{Xfer}$ may be used to reheat the working fluid after isothermal compression by the compressor 160. For example, relief view A-A illustrates how the working fluid entering at the seventh station (7) may have a higher entry temperature $T_{h,in}$, while after passing through the heat exchanger 150 the first time the working fluid exiting at the eight station (8) may have a lower exit temperature $T_{h,out}$. Most of the released heat $Q_{Xfer}$ may be transferred to the working fluid sent back through the heat exchanger 150. Thus, the working fluid entering at the tenth station (10) may have a cooler entry temperature $T_{c,in}$, while after passing through the heat exchanger 150 the second time the working fluid exiting back toward the first station (1) may have a relatively higher exit temperature $T_{c,out}$. Additionally, between the tenth station (10) and the first station (1) a temperature compensation heater 170 may be included (i.e., an external heater). The temperature compensation heater 170 may increase the temperature of the working fluid after passing through the heat exchanger 150 to a desired temperature for reentry into the first chamber 110. Without the temperature compensation heater 170, the temperature of the working fluid leaving the heat exchanger 150, on its way to the expansion process through the first converging-diverging duct 120, may continue to decrease with every cycle ( due to finite heat transfer coefficients). Thus, the temperature compensation heater 170 may correct this systemic heat and temperature loss that may otherwise occur.

In the flow type compressor case, in FIG. 2A, the alternate heat exchanger 230 may be located between stations 6 and 7, as well as between stations 9 and 10. In this way, in the flow type compressor case, the alternate heat exchanger 230 may transfer heat from the flow after station 6 back into the isothermally compressed high pressure fluid entering at station 9, which may be heated to an upper working temperature and then passed into the upper high temperature working sections 1- 4. In contrast in FIG. 1A, the heat exchanger 150 may be configured to reduce a temperature of the working fluid passing there through (i.e., Qout). Also, in Fig 1A, the compressor 160, powered by a second motor 165, may supply the necessary drawdown energy that draws the working fluid from the second chamber 130, through the heat exchanger 150, back into the heat exchanger 150, and then back into the first chamber 110, thus passing through the sixth, seventh, eighth, ninth, and tenth stations (6, 7, 8, 9, 10). Like the first motor 115, the second motor 165 may be a machine that supplies motive power for moving parts, which in-turn move the working fluid. The compressor 160 may increase a pressure of the working fluid to a predetermined pressure level that is desirable for the working fluid to have, particularly as it re-enters the first chamber 110 at station (1). The compressor 160 may be an isothermal turbine type or reciprocating compressor, which may produce isothermal pressurization.

After passing through the compressor 160 (i.e., between the ninth and tenth stations (9, 10)), the compressor 160 may force the working fluid to pass back through the heat exchanger 150, at the tenth station (10). When passing back through the heat exchanger 150, the working fluid temperature may increase back up to the upper temperature Tmax. Due to finite temperature differences, the working fluid leaving the heat exchanger 150 after compression will have a lower temperature than incoming fluid temperature. By including the temperature compensation heater 170, a temperature of the working fluid may be adjusted accordingly to the required value for entry to the power generation section at the first chamber 110. Thereafter, pressure from the compressor 160 will encourage the working fluid to return to the first station (1) in the first chamber 110. In fact, the heat exchanger 150 and the compressor 160 may be configured to initially get the working fluid to a pressure that is sufficiently high enough to subsequently be slightly depressurized when passing through while the temperature of the working fluid is increased to the upper temperature Tmax, by the temperature compensation heater 170, before re-entering the first station (1) in the first chamber 110.

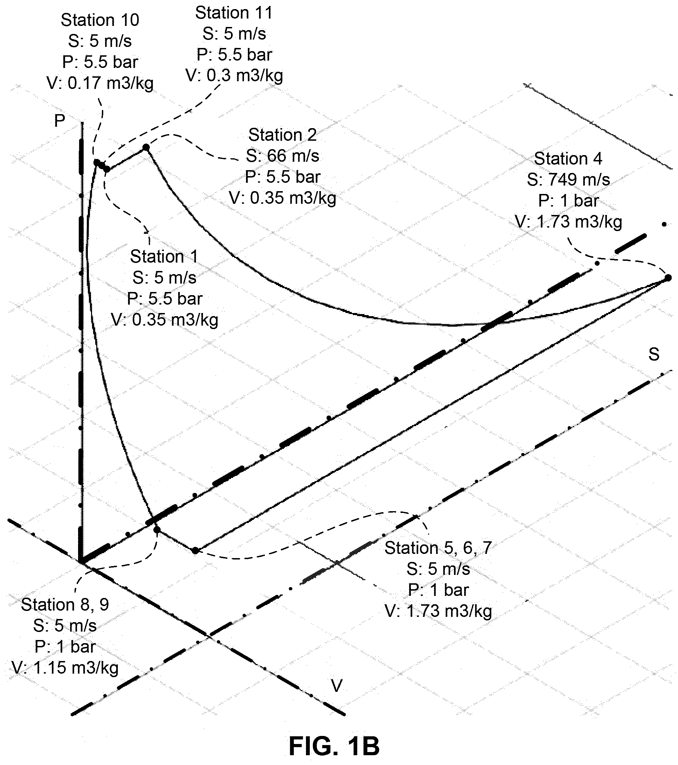

FIG. 1B is a graphical representation of changes in working fluid velocity, pressure, and volume as they relate to one another between each of the stations (1-10) of the power generating engine 100. As shown, from the first station (1) to the second station (2), the velocity S may increase, while the pressure P and volume V remain steady. From the second station (2) to the fourth station (4), the velocity S and the volume V may further increase significantly to a maximum velocity $S_{Max}$ (which may be supersonic) and a maximum volume $V_{Max}$, while the pressure decreases. From the fourth station (4), through the fifth station (5), the velocity S drops to its lowest (i.e., $S_{Min}$) due to kinetic energy absorption in the second turbine 132 (i.e., external power output) while the pressure P and volume V remain constant, except for possibly a friction-induced reduction with a decrease in velocity. From the fifth station (5) through the seventh station (7), the velocity S, pressure P, and volume V remain constant. From the seventh station (7) to the eighth station (8), the velocity S and the pressure P remain steady, while the volume V drops due to reduction in temperature. From the eighth station (8) to the ninth station (9) the velocity S, pressure P, and volume V remain constant. From the ninth station (9) to the tenth station (10), the pressure P rises dramatically due to the isothermal compression process, while the velocity S remains constant and the volume V decreases. From the tenth station (10) to the eleventh (11) station, the velocity S and pressure P remain constant, while the volume almost doubles (i.e., increases). Finally, from the eleventh station (11) back to the first station (1), the velocity S and pressure P remain constant, while the volume increases slightly, due to small increases in temperature.

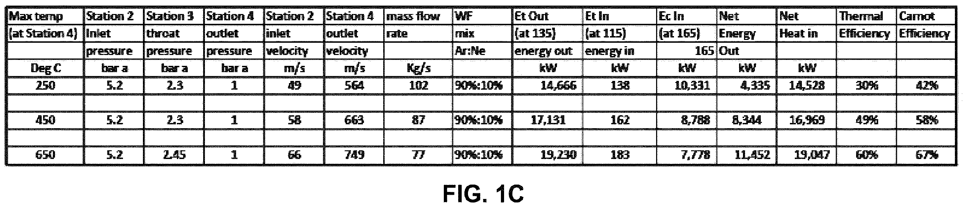

FIG. 1C illustrates a table with calculated values for an embodiment which includes a reciprocating compressor described with regard to FIG. 1A. In particular, the table shows values for three different scenarios of maximum constant temperature (i.e., Max temp), which coincides with the temperature at the second, third, and fourth station (i.e., Station 4). The values include the inlet pressure at the second station (i.e., Station 2), the throat pressure at the third station (i.e., Station 3), the outlet pressure at Station 4, the inlet velocity at Station 2, the outlet velocity at Station 4, the mass flow rate throughout, the working fluid mixture of Argon and Neon that is used (i.e., WF mix Ar:Ne), the energy output at the generator 135 (i.e., Etout) associated with the second turbine 132, the energy input at the first motor 115 (i.e., Et$_{In}$) associated with the first turbine 112, the energy input at the second motor 165 (i.e., Ec$_{In}$) associated with the compressor 160, the net energy output of the system (i.e., Net Energy Out), the net heat input to the system (i.e., Net Heat in), the thermal efficiency, and the Carnot efficiency.

FIG. 2A is a schematic view of an energy conversion system in the form of a flow type compressor engine 200 that includes a second converging-diverging duct 220, in place of the rotating or reciprocating compressor (e.g., 160 in FIG. 1A) described above with regard to the power generating engine (e.g., 100). The second converging-diverging duct 220 may include a second converging section 222, a second throat section 224, and a second diverging section 226, which are disposed between the seventh and eighth stations (7, 8). In accordance with various embodiments, the second converging-diverging duct 220 is configured to work in place of a working fluid mechanical compressor (e.g., 160 in FIG. 1A), as compared to the first converging-diverging duct 120 and particularly the three sections thereof (e.g., 122, 124, 126). The following equations may be applied to the analysis of isothermal variable area flows, in accordance with various embodiments. These equations may apply universally and consistently to all isothermal variable area flows, such as in the case of power generating and/or cooling cycles, consistent with the Second Law of Thermodynamics:

$$\frac{p}{p*} = Exp(1 - N^2) \times \frac{k}{2} \tag{1}$$

$$\frac{V}{V^*} = N \tag{2}$$

$$\frac{A}{A^*} = N^{-1} \times Exp(N^2 - 1) \times \frac{k}{2} \tag{3}$$

$$\frac{P_1}{p^*} = Exp\left(1 - N_1^2\right) \times \frac{k}{2} \tag{4}$$

$$V = (kRT)^{1/2} \tag{5}$$

Wherein:

A     is an area normal to the flow;
C     is a dimensional constant;
N     is an adiabatic mach number (V/(kRT)$^{½}$);
Q     is heat transferred to or from the system;
R     is a specific gas constant;
T     is an absolute temperature;
V     is velocity;
k     is a ratio of specific heats;
p     is pressure; and
p     is density.

From equation (1), the follow may be derived:

$$N_1 = \left(1 - \frac{2}{k} \times Ln\left(\frac{p_1}{p*}\right)\right)^{1/2} \tag{6}$$

Also, for any given $p_1$, $p^*$, the following may apply:

$$N_3 = \left( 1 - \frac{2}{k} \times Ln\left(\frac{p_3}{p*}\right) \right)^{1/2} \tag{7};$$

$$V_3 = N_3 \times (kRT)^{1/2} \tag{8};$$

$$\frac{A_1}{A^*} = N_1^{-1} \times Exp\left((N_1^2 - 1) \times \frac{k}{2}\right) \tag{9};$$

$$\frac{A_1}{A^*} = N_1^{-1} \times Exp\left((N_1^2 - 1) \times \frac{k}{2}\right) \tag{10};$$

$$\rho_1 = \frac{p_1}{RT} \tag{11};$$

$$V_1 = N_1(kRT)^{1/2} \tag{12};$$

$$E1 = \rho_1 \times A_1 \times \frac{V_1^3}{2} \tag{13};$$

$$A_3 = A^* \times N_3 \times Exp\left((N_3^2 - 1) \times \frac{k}{2}\right) \tag{14};$$

$$E3 = \rho_1 \times A_1 \times V_1 \times \frac{V_3^2}{2} \tag{15};$$

and

$$m^* = \rho_1 \times A_1 \times V_1 \tag{16}.$$

Also, considering $W_{out}$ = E3, then:

$$W_{out} = m^* \times (1 - \frac{2}{k} \times Ln\left(\frac{p_3}{p*}\right) \times (kRT) \tag{17}.$$

Using equations (7) and (16) and considering velocity, the following may be derived when N=1 (i.e., $(kRT)^{1/2}$). Similarly, considering $W_{in}$ = E1, then:

$$W_{in} = m^* \times (1 - \frac{2}{k} \times Ln\left(\frac{p_1}{p*}\right) \times (kRT) \tag{18}.$$

The working fluid at zero flow velocity may be recompressed isothermally to complete the cycle, prior to entry into the section where fluid velocity is increased to $V_1$. The energy required for such an isothermal compression is given by:

$$W_{comp} = m^* \times R \times T_a \times Ln \left(\frac{p_1}{p_3}\right) \qquad (19).$$

Heat transfer will take place between the spent fluid leaving the first converging-diverging duct 120 (i.e., leaving station (4)), and entering the second converging -diverging duct 220, through stations 6, 7, and 8 prior to returning to the first chamber 110 at the starting station (1), such that a main working temperature T may be reduced to ambient temp Ta prior to the isothermal compression step.

Hence, the thermal efficiency $\eta$ may be given by

$$\eta = \frac{W_{out} - W_{in} - W_{comp}}{W_{out} - W_{in}} \qquad (20).$$

Substituting equations (17), (18) and (19), the following may be derived:

$$\eta = 1 - \frac{T}{Ta} \qquad (21),$$

which demonstrates a Carnot efficiency and serves as a proof for proposed models according to various embodiments.

The governing equations (1) through (21) are completely reversible and thus will produce consistent results under a compression scenario. For example, the exit kinetic energy from the first diverging section 126 of the first converging-diverging duct 120, at the fourth station (4), may not be wholly absorbed by the second turbine 132 after passing the fifth station (5). Thus, between the fifth and sixth stations (5, 6) a portion of the kinetic energy from the working fluid may be retained,

The alternate heat exchanger 230 transfers heat from the incoming working fluid passing between the sixth and seventh stations (6, 7) to the isothermally compressed working fluid coming from flow type compressor (i.e., the second converging-diverging duct 220) passing between the ninth and tenth stations (9, 10). Between the sixth and seventh stations (6, 7), the velocity and pressure of the working fluid may remain unchanged, but the volume thereof my decrease dramatically.

The working fluid may enter the second converging section 222 of the second converging-diverging duct 220, at the seventh station (7), with a pressure at or below the exit pressure achieved at the fifth station (5). After the seventh station (7), the second converging-diverging duct 220 will cause the working fluid pressure to increase significantly by the time it reaches the far side of the second diverging section 226, at the eighth station (8). In addition, the second converging-diverging duct 220 will cause a further reduction in the volume of the working fluid by the time it reaches the eighth station (8). In contrast, the second converging-diverging duct 220 will cause a significant decrease in the velocity of the working fluid by the time it reaches the eighth station (8). For example, the entry velocity of the working fluid at the seventh station (7) may be supersonic, but after passing through the second converging section 222 and reaching the second throat section 224, the working fluid velocity will have reduced to sonic velocities. Beyond the throat section 224, by the time the working fluid reaches the eighth station (8), at the far end of the second diverging section 226, a velocity of the working fluid may reduce even further along with the increased pressure, and ultimately the velocity will be subsonic.

After exiting the second converging-diverging duct 220, at the eighth station (8), the working fluid pressure will have increased to a working fluid maximum pressure as a result of the size, shape, and proportions of the second converging-diverging duct 220. The working fluid final pressure (i.e., at the eighth station (8)) will remain substantially unchanged through the ninth and tenth stations (9, 10) and until after passing the first station (1) again. Thus, the dimensions and proportions of the second converging-diverging duct 220 may be designed to impart, on the working fluid, a level of pressure that is preferred for other downstream processes. In addition, and equally important, heat transfer takes place out of the second converging-diverging duct 220 to the atmosphere, constituting the heat rejection step in the thermodynamic cycle and in accordance with the second Law of Thermodynamics.

All frictional losses in practical applications may be taken into account by providing sufficient kinetic energy at the entry to the alternate heat exchanger 230 (i.e., at the sixth station (6)). In other words, kinetic energy/velocity absorption by the second turbine 132 may be reduced in order to provide sufficient velocity at the sixth station (6). A calculation with friction demonstrates that, with compensation for frictional pressure loss, a re-pressurization of the working fluid by the time it reaches the eighth station (8) may be achieved.

After the re-pressurization process has taken place and the working fluid has exited the second converging-diverging duct 220, at the eighth station (8), the working fluid may pass back through the alternate heat exchanger 230, where the working fluid may be heated prior to reentry into the first chamber 110. In this way, similar to the heat transfer described above with regard to the heat exchanger 150, the alternate heat exchanger 230 may transfer heat from the working fluid passing between the sixth and seventh stations (6, 7) to the working fluid passing between the ninth and tenth stations (9, 10). Due to finite heat transfer coefficients, the exiting temperature of pressurized working fluid after passing through the second converging-diverging duct 220 may tend to be lower than a desired temperature of the working fluid as it re-enters the initial chamber 110. Thus, the alternate heat exchanger 230 may be used to increase the temperature of the working fluid before it is returned to the first chamber 110. Any deficiency in temperature of the working fluid leaving alternate heat exchanger 230 may be made up by external high temperature heat input to the fluid by the temperature compensation heater 170, prior to entry at station 1. Such minor heat input, typically an increase in temperature of working fluid by 20 - 30 Celsius may take place along the WF flow path between stations 10 and 1.

The flow type compressor arrangement shown in FIG. 2A has several advantages, notably a significant increase in heat transfer area, as compared with a reciprocating type isothermal compressor. Thus, various embodiments provide back-to-back flow type expansion and compression sections in Stirling and Ericsson thermodynamic cycles.

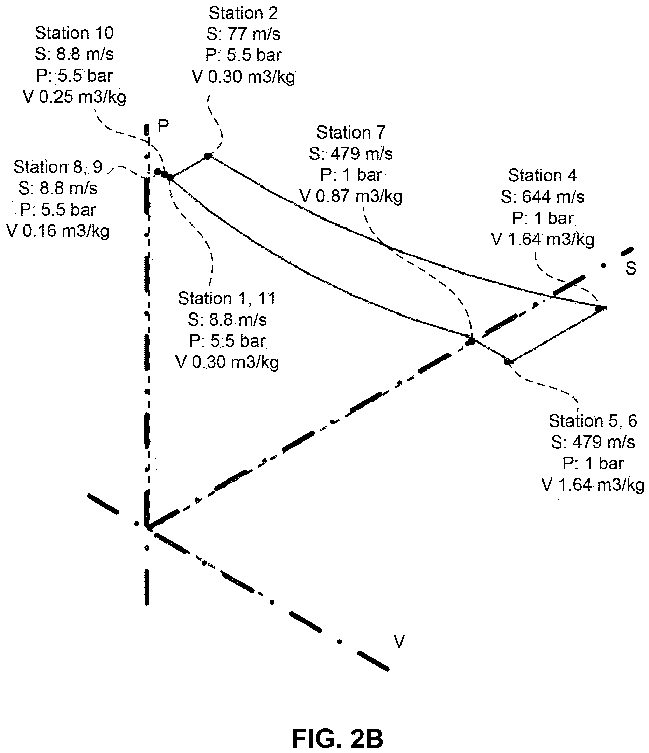

FIG. 2B is a graphical representation of changes in working fluid velocity, pressure, and volume as they relate to one another between each of the stations (1-11) of the flow type compressor engine 200. As shown, from the first station (1) to the second station (2), the velocity increases with no change in pressure or volume. From the second station (2) to the fourth station (4), the pressure decreases significantly, the pressure drops to a minimum pressure $P_{Min}$, and the velocity increases to a maximum velocity $V_{Max}$. From the fourth station (4), through the fifth station (5), the pressure and volume remain constant with a decrease in velocity. The decrease in velocity is due to the kinetic energy of the flow leaving station 4 being absorbed in the second turbine 132 and producing work for export by the generator 135 (i.e., $Et_{Out}$). Between the fifth station (5) and the sixth station (6), the pressure, volume, and velocity do not significantly change. From the sixth station (6) to the seventh station (7), the pressure and the velocity remain the same, while the volume drops by about half, due to heat exchange with (i.e., heat transfer to) compressed working fluid. There may be a minor frictional pressure drop between the sixth station (6) and the seventh station (7). From the seventh station (7) to the eighth station (8), the pressure increases back to maximum pressure $P_{Max}$, whilst velocity reduces and the volume reduces even further. Between the eighth and ninth stations (8,9), the pressure, volume, and velocity do not significantly change. Finally, from the ninth station (9), through the tenth station (10), eleventh station (11), and back to the first station (1), the pressure and velocity remain constant (not counting possible minor reductions in pressure due to friction), but the volume may almost double due to heat transfer to the working fluid, leading to temperature increase.

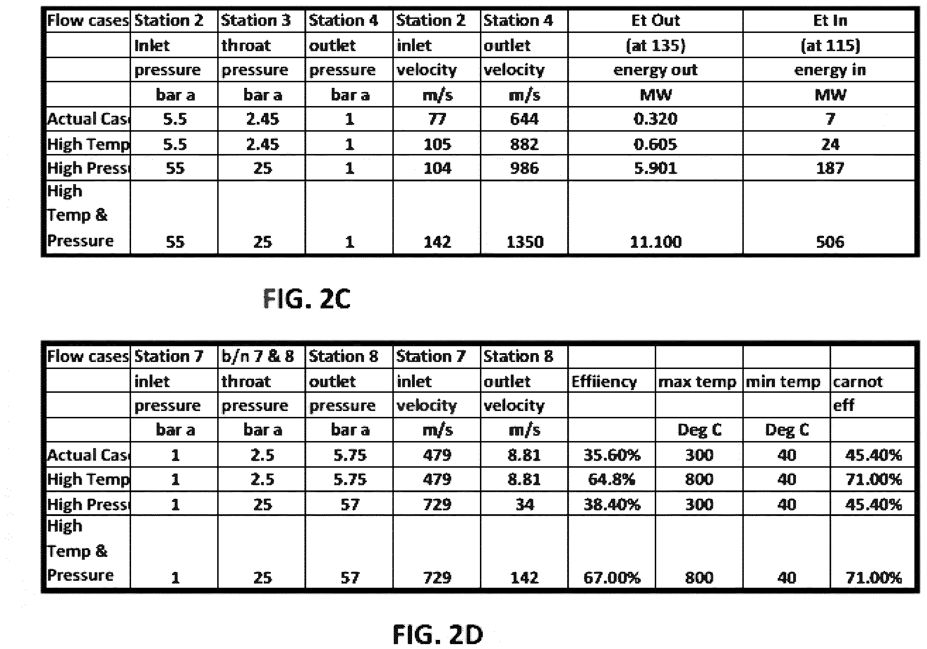

FIGS. 2C and 2D illustrate tables with calculated values for the flow type compressor arrangement described with regard to FIG. 2A. In particular, the tables show values for four different scenarios; namely of an "actual case" (referred to as such for its low temperature and pressure), a high temperature case, a high pressure case, and a combined high pressure and high temperature case. In FIG. 2C, the values include the inlet pressure at the second station (i.e., Station 2), the throat pressure at the third station (i.e., Station 3), the outlet pressure at the fourth station (i.e., Station 4), the inlet velocity at Station 2, the outlet velocity at Station 4, the energy input at the first motor 115 (i.e., Etin) associated with the first turbine 112 (i.e., Station 2), and the energy output at the generator 135 (i.e., Etout) associated with the second turbine 132 (i.e., Station 4). In FIG. 2D, the values include the inlet pressure at the seventh station (i.e., Station 7), the throat pressure between Station 7 and the eighth station (i.e., Station 8), the outlet pressure at Station 8, the inlet velocity at Station 7, and the outlet velocity at Station 8, the thermal efficiency, the maximum temperature, the minimum temperature, and the Carnot efficiency.

**Cooling Cycle**

Given that Stirling cycles are reversible, a reversed Stirling cycle may act like a cooler or refrigerator and may be used in cryogenic or refrigeration cooling cycles. The refrigeration cycle herein described again utilizes the isothermal flow concept described above, but heat gain and heat loss or output in the expansion and compression sections are carried out at different temperatures than that in the power generation cycles.

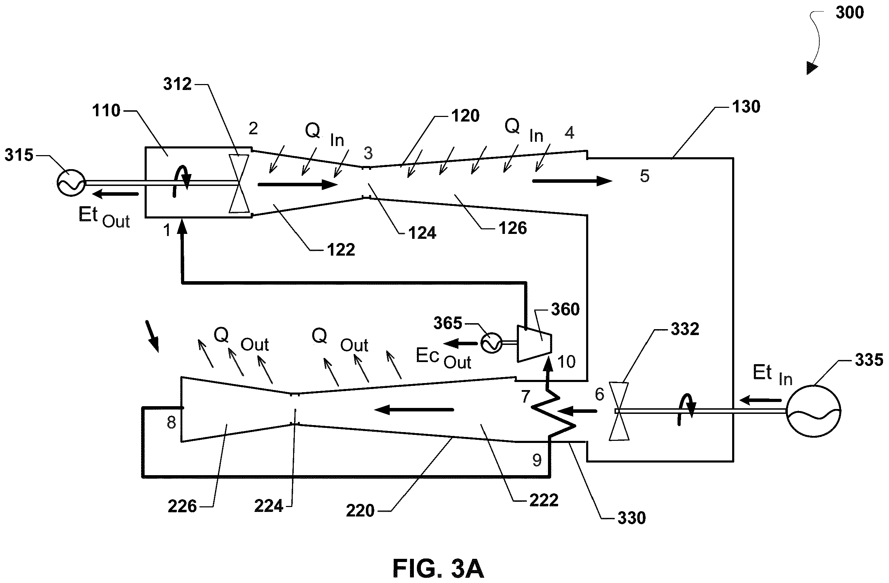

FIG. 3A is a schematic view of an energy conversion system in the form of a cooling cycle engine 300. In the cooling cycle engine 300, the working fluid may be introduced into the first chamber 110 at or below air liquefaction temperatures (e.g., -196 Deg C) or other chosen low temperature. A first turbine 312, which may be a compression or expansion turbine, may be located in the first chamber 110 and configured, in the case of an expansion turbine to convert and thus export energy from the working fluid as it passes through the first turbine 312. Low temperatures from the first chamber 110 to the second chamber 130 are maintained and heat absorbed into the flow from an external relatively cold source by means of the flow type isothermal process occurring in the first converging diverging duct 120, as described by the isothermal flow equations. In this way, before exiting the second chamber 130, at the sixth station (i.e., station 6), the working fluid may be accelerated by a second turbine 332 driven to rotate by a third motor 335, which acts as a suitable booster for increasing a velocity of the working fluid. In this way, the second turbine 332 may be a compression turbine or a turbine designed to change flow velocities only. Like the first and second motors (e.g., 115, 165 in FIGS. 1A-2D), the third motor 335 may be a machine that supplies motive power for moving parts. It may be noted that in contrast to the power generating engine 100 (FIG. 1A) or the flow type compressor engine 200 (FIG. 2A), the cooling cycle engine 300 need not include an expansion turbine (e.g., 132) with a generator (e.g., 135) just after the first converging-diverging duct 120. Rather, the cooling cycle engine 300 may use the kinetic energy from the working fluid in the second chamber 130 as an input to the second converging-diverging duct 220. Thus, the second turbine 332 adds further kinetic energy to the working fluid from first converging duct to provide correct entry conditions to the compression process. The purpose of this is to provide sufficient energy for the flow type compression process occurring in section 220. In contrast, the first turbine 312 may be configured to decelerate and thus capture energy from the working fluid, which may be collected/exported through the second generator 315. An expander 360 and third generator 365 may also be configured to capture energy from the working fluid. The purpose of expander 360 is given below. Like the first generator (e.g., 135 in FIG. 1A-2D), the second and third generators 315, 365 may be dynamos or similar machines for converting mechanical energy into electricity. Energy recovered (i.e., $Ec_{Out}$, $Et_{Out}$) by first turbine 312 and the expander 360 may be used to offset energy input (i.e., $Et_{In}$) by the third motor 335 to drive the second turbine 332.

From the second chamber 130, the working fluid may be accelerated by the second turbine 332 before being directed into a reverse heat exchanger 330. In contrast to the heat exchangers of earlier embodiments (e.g., 150, 230), the reverse heat exchanger 330 may initially heat the working fluid between stations 6 and 7, only to cool it down on the second pass between stations 9 and 10. Thus, the pressurized working fluid exiting the second converging-diverging duct 220 may be cooled significantly prior to being directed into the expander 360, which will further reduce the pressure and increase the volume of the working fluid, and also reduce the temperature to match the temperature in the first converging-diverging duct 120, prior to reentry into the first chamber 110 at Station 1. In this way, an atmospheric temperature pressurized working fluid may be cooled to a temperature appropriate for the working fluid to be at when re-entering the first converging-diverging duct 120, through the combination of the heat exchanger 330 and the expansion turbine 360. The working fluid may be just above ambient temperature through the second converging-diverging duct 220 and rejects heat to the atmosphere.

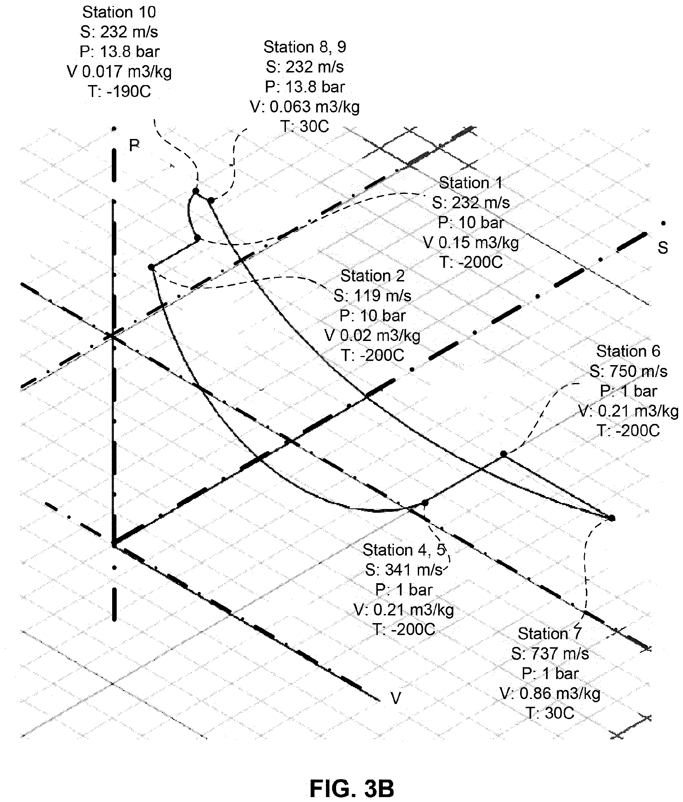

FIG. 3B is a graphical representation of changes in working fluid velocity, pressure, and volume as they relate to one another between each of the stations (1-10) of the cooling cycle engine 300. As shown, from Station 1, a pressurized working fluid from the expander 360 is directed at a relatively high velocity through the first turbine 312, which is configured to slow the working fluid down before being directed into the converging section, at Station 2. The excess velocity in the working fluid, from Station 1, may be absorbed by the first turbine 312. Between Station 1 and 2, other than the working fluid velocity dropping, its volume will also reduce while its pressure and temperature will remain substantially the same.

In the first converging-diverging duct 120, the working fluid will acquire heat in the form of low temperature thermal energy from an external source at a cooling temperature, which may be negative 200 degrees Celsius (-200 C) or lower. In this section isothermal flow conditions exist. The acquisition of heat energy under very low or cryogenic conditions will be done as an isothermal process. Between Stations 2 and 3, the working fluid velocity and volume will increase, while its pressure drops and temperature remains the same. Between Stations 3, 4, and 5, the working fluid may further accelerate to supersonic velocity, with further increases in volume, decreases in pressure, and maintaining a constant low temperature.

From Station 5, the working fluid may be directed into the reverse heat exchanger 330 by the second turbine 332 at station 6, where the fluid velocity may be increased as appropriate velocity for entry into the second converging-diverging duct 220. Thus, between Stations 5 and 6, the working fluid velocity will increase further to a maximum velocity ($V_{Max}$), while the pressure, volume, and temperature remain constant.

The reverse heat exchanger 330 may add heat to the cold working fluid entering at station 6. Thus, between Stations 6 and 7, the velocity may reduce somewhat, while the pressure and temperature remain the same and the volume increases. As the working fluid is made to pass through the second converging-diverging duct 220, from Station 7 to Station 8, the velocity thereof will reduce dramatically with a corresponding dramatic increase in pressure, a decrease in volume, and a constant temperature maintained. The compression that takes place in the second converging-diverging duct 220 happens under constant temperature conditions by expelling heat $Q_{Out}$ that is generated when the working fluid passes through that section. In this way, the heat transfer $Q_{Out}$ takes place under a temperature difference between the second converging-diverging duct 220 and the outside temperature (e.g., ambient temperature), which is a lower temperature. Between Station 7 and Station 8, a supersonic deceleration of the flow followed by a subsonic deceleration and conversion of the kinetic energy in the working fluid to pressure energy takes place. The process is an exact inverse of a forward flow in the first converging-diverging duct 120 in which the addition of heat to the working fluid resulted in acceleration of a flow from subsonic to supersonic conditions.

After station 8, the working fluid flow, which is at ambient temperature, goes back into the reverse heat exchanger 330, at Station 9. Between Stations 9 and 10, which correspond to the working fluid passing back through the reverse heat exchanger 330, the working fluid velocity and pressure will remain constant (not considering minor reductions due to friction), but the volume will increase and the temperature will drop dramatically before entering the expander 360 at Station 10. Between Stations 10 and 1, the working fluid velocity will remain constant, but the pressure and temperature will drop further, while the volume will increase.

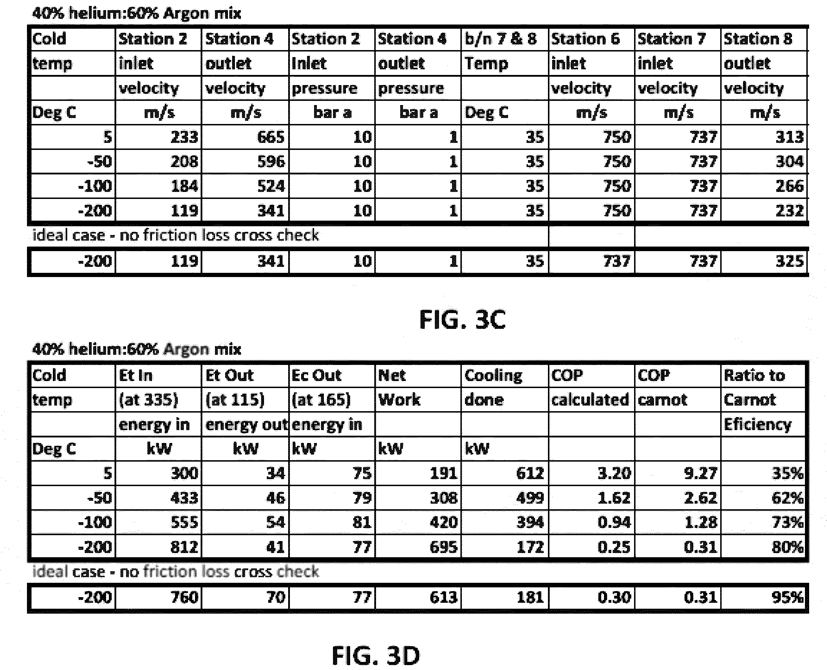

FIGS. 3C and 3D illustrate tables with calculated values for the cooling cycle engine (e.g., 300) described with regard to FIG. 3A. In particular, the tables show values for four different scenarios that each use different temperature minimums ($T_{Min}$) for the working fluid (i.e., between Stations 1 and 6). In FIG. 3C, the values include the inlet velocity at Station 2, the outlet velocity at Station 4, the inlet pressure at Station 2, the outlet pressure at Station 4, the throat temperature between Stations 7 and 8 (i.e., b/n 7 & 8), the inlet velocity at Station 6, the inlet velocity at Station 7, the outlet velocity at Station 8, the inlet pressure at Station 7, and the outlet pressure at Station 8. In FIG. 3D, the values include the energy input at the third motor 335 (i.e., Etin) associated with the second turbine 332, the energy output at the second generator 315 (i.e., $Et_{Out}$) associated with the first turbine 312, the energy output at the third generator 365 (i.e., $Ec_{Out}$) associated with the expander 360, the Net Work, the Cooling done by the system, the calculated Coefficient of Performance (COP), the Carnot COP, and the Carnot efficiency.

The values in FIGS. 3C and 3D are derived by taking into account frictional loss in all flows. The calculated COP corresponds to a reversed Carnot type refrigerator, which is the case in ideal Stirling or Ericsson type devices. Since the COP in an ideal case (i.e., with no friction) almost equals, but is less than the Carnot COP, this demonstrates that the cooling cycle engine 300 may follow established principles pertaining to Stirling and Ericsson cycles. In addition, calculated COP demonstrates that values calculated for the cooling cycle engine 300 are consistent with the Second Law of Thermodynamics, which restricts all heat engines & cooling cycles/refrigerators working in closed cycles to no more than Carnot efficiencies and Carnot COPs. The COP under real-world conditions (i.e., where surface friction and finite heat transfer exist, plus real fluid properties are taken into account) demonstrates that as a temperature of the cold-side (i.e., the first converging-diverging duct 120) drops (i.e., between Stations 9, 10, and 1), the cycle COP comes closer to Carnot COP than at higher temperatures, as demonstrated in FIG. 1C.

Stirling-type cryo-coolers may produce the highest efficiency in cryogenic cooling applications and are used, for example, in helium liquefaction and other applications. As such, a device in accordance with various embodiments may be highly beneficial for such cooling applications.

Various embodiments utilize one or more fixed, stationary converging-diverging ducts wherein the heat input is through the sides from a heat source located outside the converging-diverging ducts. Various other embodiments, include a rotating converging-diverging duct, which gives rise to a system with enhanced heat transfer and capable of utilizing higher working temperatures.

Various embodiments herein provide rotation of at least one of the converging-diverging ducts. In prior art electro-hydrodynamic or magneto-hydrodynamic systems, a rotating duct is not generally possible or is too cumbersome to be practical because of the need to provide voltage sources or current pick-up terminals.

Various embodiments illustrated and described are provided merely as examples to illustrate various features of the claims. However, features shown and described with respect to any given embodiment are not necessarily limited to the associated embodiment and may be used or combined with other embodiments that are shown and described. Further, the claims are not intended to be limited by any one example embodiment. For example, one or more of the operations of the methods may be substituted for or combined with one or more operations of the methods.

The foregoing descriptions and diagrams are provided merely as illustrative examples and are not intended to require or imply that the operations of various embodiments may be performed in the order presented. As will be appreciated by one of skill in the art the order of operations in the foregoing embodiments may be performed in any order. Words such as "thereafter," "then," "next," etc. are not intended to limit the order of the operations; these words are used to guide the reader through the description of the methods. Further, any reference to claim elements in the singular, for example, using the articles "a," "an," or "the" is not to be construed as limiting the element to the singular.

The preceding description of the disclosed embodiments is provided to enable any person skilled in the art to make or use the claims. Various modifications to these embodiments will be readily apparent to those skilled in the art, and the generic principles defined herein may be applied to other embodiments and implementations without departing from the scope of the claims. Thus, the present disclosure is not intended to be limited to the embodiments and implementations described herein, but is to be accorded the widest scope consistent with the following claims and the principles and novel features disclosed herein.

With regard to specific flows in the heat exchangers (e.g., 130, 230, and 330) the following comments are of relevance:

- Concerning the inlet and outlet flow in heat exchangers (e.g., 150 in Fig 1A, 230 in Fig 2A, and 330 in Fig 3A), which fall into the category of compressible flows of gases with heat transfer.
- Cooled supersonic flows leaving heat exchangers (e.g., 230, 330) after second turbines (132, 332). The outgoing flow after heat transfer and cooling will have a slightly lower pressure and slightly higher velocity than that at station 6 entry. However, this will be compensated for in the compression C-D duct 220 in both cases

- Cooled subsonic flow leaving the heat exchanger (e.g., 150 in Fig 1A). The velocity will be slightly reduced and pressure increased , which will be carried through the compressor (e.g., 160).
- Heated subsonic flows leaving heat exchangers (e.g., 150, 230, and 330),due to the flows being subsonic and at a low value, the velocity will slightly increase, accompanied by a small pressure drop. This will be adequately compensated in the first chamber (e.g., 110 in FIG. 1A) and through the action of the first turbine (e.g., 112).

**Claims**

1.  An energy conversion system, comprising:

    a first converging-diverging duct configured to receive a working fluid;
    a first turbine configured to increase or decrease kinetic energy of the working fluid entering the first converging-diverging duct;
    a compressor device configured to receive the working fluid after exiting the first converging-diverging duct;
    a second turbine disposed in a flow path of the working fluid between the first converging-diverging duct and the compressor device, wherein the second turbine is configured to decrease or increase kinetic energy of the working fluid entering the compressor device, wherein the first and second turbines impart opposite changes to kinetic energy in the working fluid; and
    a return duct configured to return the working fluid to the first converging-diverging duct after passing through the compressor device.

2.  The energy conversion system of claim 1, further comprising:
    a heat exchanger configured to receive and change a temperature of the working fluid after exiting the first converging-diverging duct.

3.  The energy conversion system of claim 1, wherein the compressor device is a reciprocating compressor configured to change a volume of the working fluid after exiting the first converging-diverging duct and before being returned to an initial chamber housing the first turbine.

4.  The energy conversion system of claim 1, wherein the compressor device is a second converging-diverging duct configured to change a pressure of the working fluid using an isothermal process.

5.  The energy conversion system of claim 1, wherein the compressor device is a second converging-diverging duct configured to change a velocity of the working fluid using an isothermal process.

6.  The energy conversion system of claim 5, wherein the second converging-diverging duct is configured to draw heat out of the working fluid flowing therein.

7.  The energy conversion system of claim 6, wherein the second converging-diverging duct is configured to initially reduce a supersonic velocity of the working fluid to a sonic velocity while increasing a pressure of the working fluid and subsequently reduce the sonic velocity and further increase the pressure of the working fluid.

8.  The energy conversion system of claim 1, wherein the compressor device includes a second converging-diverging duct in the flow path following the second converging-diverging duct.

9.  The energy conversion system of claim 1, wherein the first turbine decreases the kinetic energy of the working fluid and the second turbine increases the kinetic energy of the working fluid.

10. The energy conversion system of claim 1, further comprising:
    an external heater configured to heat the first converging-diverging duct for heating the working fluid flowing therein, wherein the heated first converging-diverging duct increases a velocity of the working fluid flowing therein.

11. The energy conversion system of claim 1, further comprising:
    a temperature compensation heater disposed in the flow path between the compressor device and the first converging-diverging duct.

**12.** The energy conversion system of claim 1, further comprising an expansion turbine in the flow path between the compressor device and the first converging-diverging duct.

**13.** The energy conversion system of claim 1, further comprising:
an external heater configured to heat the working fluid before returning to the first converging-diverging duct.

**14.** The energy conversion system of claim 1, wherein the first turbine is configured to increase the kinetic energy of the working fluid for providing power output through energy acquisition in the first converging-diverging duct via the second turbine or the first turbine is configured to decrease the kinetic energy of the working fluid for cooling the working fluid.

**15.** The energy conversion system of claim 1, wherein the first turbine is configured to decrease the kinetic energy of the working fluid for cooling the working fluid.

**FIG. 1A**

FIG. 1B

| Max temp | Station 2 | Station 3 | Station 4 | Station 2 | Station 4 | mass flow | WF | Et Out | Et In | Ec In | Net | Net | Thermal | Carnot |
|---|---|---|---|---|---|---|---|---|---|---|---|---|---|---|
| (at Station 4) | Inlet | throat | outlet | inlet | outlet | rate | mix | (at 135) | (at 115) | (at 165) | Energy | Heat in | Efficiency | Efficiency |
| | pressure | pressure | pressure | velocity | velocity | | Ar:Ne | energy out | energy in | 165 | Out | | | |
| Deg C | bar a | bar a | bar a | m/s | m/s | Kg/s | | kW | kW | kW | kW | kW | | |
| 250 | 5.2 | 2.3 | 1 | 49 | 564 | 102 | 90%:10% | 14,666 | 138 | 10,331 | 4,335 | 14,528 | 30% | 42% |
| | | | | | | | | | | | | | | |
| 450 | 5.2 | 2.3 | 1 | 58 | 663 | 87 | 90%:10% | 17,131 | 162 | 8,788 | 8,344 | 16,969 | 49% | 58% |
| | | | | | | | | | | | | | | |
| 650 | 5.2 | 2.45 | 1 | 66 | 749 | 77 | 90%:10% | 19,230 | 183 | 7,778 | 11,452 | 19,047 | 60% | 67% |

**FIG. 1C**

**FIG. 2A**

EP 4 194 693 A1

FIG. 2B

| Flow cases | Station 2 | Station 3 | Station 4 | Station 2 | Station 4 | Et Out | Et In |
|---|---|---|---|---|---|---|---|
| | Inlet | throat | outlet | inlet | outlet | (at 135) | (at 115) |
| | pressure | pressure | pressure | velocity | velocity | energy out | energy in |
| | bar a | bar a | bar a | m/s | m/s | MW | MW |
| Actual Cas | 5.5 | 2.45 | 1 | 77 | 644 | 0.320 | 7 |
| High Temp | 5.5 | 2.45 | 1 | 105 | 882 | 0.605 | 24 |
| High Press | 55 | 25 | 1 | 104 | 986 | 5.901 | 187 |
| High Temp & Pressure | 55 | 25 | 1 | 142 | 1350 | 11.100 | 506 |

FIG. 2C

| Flow cases | Station 7 | b/n 7 & 8 | Station 8 | Station 7 | Station 8 | | | | |
|---|---|---|---|---|---|---|---|---|---|
| | inlet | throat | outlet | inlet | outlet | Effiiency | max temp | min temp | carnot |
| | pressure | pressure | pressure | velocity | velocity | | | | eff |
| | bar a | bar a | bar a | m/s | m/s | | Deg C | Deg C | |
| Actual Cas | 1 | 2.5 | 5.75 | 479 | 8.81 | 35.60% | 300 | 40 | 45.40% |
| High Temp | 1 | 2.5 | 5.75 | 479 | 8.81 | 64.8% | 800 | 40 | 71.00% |
| High Press | 1 | 25 | 57 | 729 | 34 | 38.40% | 300 | 40 | 45.40% |
| High Temp & Pressure | 1 | 25 | 57 | 729 | 142 | 67.00% | 800 | 40 | 71.00% |

FIG. 2D

EP 4 194 693 A1

EP 4 194 693 A1

**FIG. 3A**

Station 10
S: 232 m/s
P: 13.8 bar
V 0.017 m3/kg
T: -190C

Station 8, 9
S: 232 m/s
P: 13.8 bar
V: 0.063 m3/kg
T: 30C

Station 1
S: 232 m/s
P: 10 bar
V 0.15 m3/kg
T: -200C

Station 2
S: 119 m/s
P: 10 bar
V 0.02 m3/kg
T: -200C

Station 6
S: 750 m/s
P: 1 bar
V: 0.21 m3/kg
T: -200C

Station 4, 5
S: 341 m/s
P: 1 bar
V: 0.21 m3/kg
T: -200C

Station 7
S: 737 m/s
P: 1 bar
V: 0.86 m3/kg
T: 30C

P

S

V

# FIG. 3B

40% helium:60% Argon mix

| Cold temp | Station 2 inlet velocity | Station 4 outlet velocity | Station 2 Inlet pressure | Station 4 outlet pressure | b/n 7 & 8 Temp | Station 6 inlet velocity | Station 7 inlet velocity | Station 8 outlet velocity |
|---|---|---|---|---|---|---|---|---|
| Deg C | m/s | m/s | bar a | bar a | Deg C | m/s | m/s | m/s |
| 5 | 233 | 665 | 10 | 1 | 35 | 750 | 737 | 313 |
| -50 | 208 | 596 | 10 | 1 | 35 | 750 | 737 | 304 |
| -100 | 184 | 524 | 10 | 1 | 35 | 750 | 737 | 266 |
| -200 | 119 | 341 | 10 | 1 | 35 | 750 | 737 | 232 |
| ideal case - no friction loss cross check | | | | | | | | |
| -200 | 119 | 341 | 10 | 1 | 35 | 737 | 737 | 325 |

## FIG. 3C

40% helium:60% Argon mix

| Cold temp | Et In (at 335) energy in | Et Out (at 115) energy out | Ec Out (at 165) energy in | Net Work | Cooling done | COP calculated | COP carnot | Ratio to Carnot Eficiency |
|---|---|---|---|---|---|---|---|---|
| Deg C | kW | kW | kW | kW | kW | | | |
| 5 | 300 | 34 | 75 | 191 | 612 | 3.20 | 9.27 | 35% |
| -50 | 433 | 46 | 79 | 308 | 499 | 1.62 | 2.62 | 62% |
| -100 | 555 | 54 | 81 | 420 | 394 | 0.94 | 1.28 | 73% |
| -200 | 812 | 41 | 77 | 695 | 172 | 0.25 | 0.31 | 80% |
| ideal case - no friction loss cross check | | | | | | | | |
| -200 | 760 | 70 | 77 | 613 | 181 | 0.30 | 0.31 | 95% |

## FIG. 3D

EP 4 194 693 A1

Europäisches
Patentamt

European
Patent Office

Office européen
des brevets

# EUROPEAN SEARCH REPORT

Application Number

EP 21 21 3773

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2006/028444 A1 (TERRAN TECHNOLOGIES INC [US]) 16 March 2006 (2006-03-16) * page 4, last paragraph – page 5, paragraph first; figure 1 * ----- | 1-15 | INV. F03G6/06 F02C1/10 F02G1/04 |
| A | EP 2 234 253 A2 (ROLLS ROYCE PLC [GB]) 29 September 2010 (2010-09-29) * paragraph [0029]; figures 14-16 * ----- | 1 | |
| A | US 3 886 475 A (PINSLEY EDWARD A) 27 May 1975 (1975-05-27) * column 2, lines 5-65; figure 1 * ----- | 1 | |
| A | DE 24 13 378 A1 (JUSTUS SIEGFRIED DIPL PHYS) 2 October 1975 (1975-10-02) * paragraphs [0007], [0008]; claim 1; figure 1 * ----- | 1 | |

TECHNICAL FIELDS
SEARCHED    (IPC)

F03G
F02G
F02K
F02C

The present search report has been drawn up for all claims

| Place of search | Date of completion of the search | Examiner |
|---|---|---|
| Munich | 23 May 2022 | de Martino, Marcello |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
 
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 21 3773

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2022

| Patent document cited in search report | | Publication date | Patent family member(s) | | | Publication date |
|---|---|---|---|---|---|---|
| WO 2006028444 | A1 | 16-03-2006 | NONE | | | |
| EP 2234253 | A2 | 29-09-2010 | EP | 2234253 | A2 | 29-09-2010 |
| | | | RU | 2010110985 | A | 27-09-2011 |
| | | | US | 2010237716 | A1 | 23-09-2010 |
| US 3886475 | A | 27-05-1975 | NONE | | | |
| DE 2413378 | A1 | 02-10-1975 | NONE | | | |

EPO FORM P0459

For more details about this annex : see Official Journal of the European Patent Office, No. 12/82